# EUROPEAN PATENT APPLICATION

(11) **EP 4 811 730 A1**
(43) Date of publication of application: **23.09.2026**
(21) Application number: 23958837.9
(22) Date of filing: 14.11.2023
(51) Int. Cl.: H04L 25/02

(54) **VEHICLE CONTROL SYSTEM, VEHICLE CONTROL DEVICE, AND METHOD FOR DETECTING DETERIORATION OF COMMUNICATION LINE**

(71) Applicant: Astemo, Ltd., Chiyoda-ku, Tokyo 1000004 (JP)
(72) Inventor: TAKEUCHI Yudai, Hitachinaka-shi, Ibaraki 312-8503 (JP); SAKAMOTO Hideyuki, Hitachinaka-shi, Ibaraki 312-8503 (JP); NOKAIDO Takaaki, Hitachinaka-shi, Ibaraki 312-8503 (JP); IKEDA Yasuhiro, Hitachinaka-shi, Ibaraki 312-8503 (JP)
(74) Representative: MERH-IP Matias Erny Reichl Hoffmann Patentanwälte PartG mbB
(86) International application number: PCT/JP2023/040992
(87) International publication number: WO 2025/104828

(57) **Abstract**

The present invention has an object to provide a vehicle control system, a vehicle control device, and a method for detecting deterioration of a communication line that are each capable of detecting a deterioration state of the communication line with high accuracy. For this object, a vehicle control system 700 includes multiple vehicle control devices 702 to 707 connected through a communication line 701, the multiple vehicle control devices 702 to 707 each being configured to sample a bus level 301 of the communication line 701 at a sample point 204 occurring in one bit-time period during communication with another vehicle control device, and the multiple vehicle control devices 702 to 707 including one or more predetermined vehicle control devices that determine whether the amount of variation 205 of the sample point 204 from the one-bit time period is equal to or more than a threshold predetermined, and determine whether the communication line 701 is deteriorated based on a frequency at which the amount of variation 205 is determined to be equal to or more than the threshold predetermined.

## Description

### Technical Field

The present invention relates to a vehicle control system, a vehicle control device, and a method for detecting deterioration of a communication line.

### Background Art

Network protocols widely used in in-vehicle networks include a control area network (CAN) communication method. The communication method is widely used in industrial equipment, agricultural machines, medical equipment, railways, elevators, and the like. When CAN communication is stopped for some reason, safety may be affected in applications such as the above-described in-vehicle device. For this reason, a method for detecting a sign of a communication failure has been proposed (PTL 1) to prevent the CAN communication from unintentionally stopping.

PTL 1 discloses a communication device that transmits and receives data to and from another communication device through a communication line based on a CAN communication protocol, the communication device including: a controller that controls transmission and reception of the data; a delay time calculation unit that receives transmission data output from the controller and reception data output from the other communication device as a response to the transmission data to calculate a delay time of a communication path from ACK signals included in the transmission data and the reception data; and a delay determination unit that compares the delay time with a threshold to output delay determination information.

### Citation List

### Patent Literature

PTL 1: JP 2022-102238 A

### Summary of Invention

### Technical Problem

Multiple vehicle control devices (ECUs) mounted on a vehicle are connected by a communication line to perform communication. Thus, communication between ECUs has a risk of "disconnection of a communication line", and has an actual example in which disconnection of communication line has occurred (one company has a case of recall on the assumption that cable damage may cause a function to fail). Although disconnection of the communication line is detected against the risk of the disconnection, detection of abnormality of the communication line before the disconnection is desirable to prevent the disconnection in advance.

Additionally, conventional CAN communication is slow, and a delay time caused by deterioration of a communication line is very short as compared with one bit-time of data to be transmitted and received, thereby causing difficulty in detecting deterioration of the communication line. However, with an increase in speed of CAN communication such as CAN-FD in recent years, importance of deterioration detection has increased. When an ECU is further assumed to be mounted on a two-wheeled vehicle, a communication line is more likely to be subjected to external environment such as external temperature and humidity than an automobile, and thus a risk of disconnection of the communication line is increased. Preliminary detection of a deterioration state enables enhancing safety.

Meanwhile, the communication device described in PTL 1 is configured to calculate the delay time of the communication line based on the ACK signal included in the transmission data and the reception data, so that the delay cannot be detected until one time of transmission and reception of data is completed. Thus, detecting the deterioration state of the communication line with high accuracy is difficult.

The present invention has been made in view of the above problems, and it is an object of the present invention to provide a vehicle control system, a vehicle control device, and a method for detecting deterioration of a communication line that are each capable of detecting a deterioration state of the communication line with high accuracy.

### Solution to Problem

To achieve the above object, the present invention provides a vehicle control system including multiple vehicle control devices connected through a communication line, the multiple vehicle control devices each being configured to sample a bus level of the communication line at a sample point occurring in one bit-time period during communication with another vehicle control device, and the multiple vehicle control devices including one or more predetermined vehicle control devices that determine whether the amount of variation of the sample point from the one bit-time period is equal to or more than a threshold predetermined, and determine whether the communication line is deteriorated based on a frequency at which the amount of variation is determined to be equal to or more than the threshold predetermined.

The present invention also provides a vehicle control device that is connected to another vehicle control device through a communication line and that samples a bus level of the communication line at a sample point occurring in one bit-time period during communication with the other vehicle control device, the vehicle control device being configured to determine whether the amount of variation of the sample point from the one bit-time period is equal to or more than a threshold predetermined, and determine whether the communication line is deteriorated based on a frequency at which the amount of variation is determined to be equal to or more than the threshold predetermined.

The present invention further provides a method for detecting deterioration of a communication line in a vehicle control system including multiple vehicle control devices connected through a communication line, the multiple vehicle control devices each being configured to sample a bus level of the communication line at a sample point occurring in one bit-time period during communication with another vehicle control device, the method including: determining whether the amount of variation of the sample point from the one bit-time period is equal to or more than a threshold predetermined; and determining whether the communication line is deteriorated based on a frequency at which the amount of variation is determined to be equal to or more than the threshold predetermined.

### Advantageous Effects of Invention

The present invention enables detecting the deterioration state of the communication line with high accuracy by determining whether the communication line is deteriorated based on the frequency at which the amount of variation of the sample point from the one bit-time period is determined to be equal to or more than the threshold predetermined.

### Brief Description of Drawings

[FIG. 1] FIG. 1 is a configuration diagram of a vehicle control system.
[FIG. 2] FIG. 2 is a diagram illustrating a section of one bit-time.
[FIG. 3] FIG. 3 is a diagram illustrating a state of CAN communication with no occurrence of abnormal delay.
[FIG. 4] FIG. 4 is a diagram illustrating a state of CAN communication with a continuous occurrence of abnormal delay.
[FIG. 5] FIG. 5 is a diagram illustrating a state of CAN communication with a temporal occurrence of abnormal delay.
[FIG. 6] FIG. 6 is a diagram illustrating the amount of variation of a sample point when a regular data string is received through a communication line in a deterioration state.
[FIG. 7] FIG. 7 is a diagram illustrating the amount of variation of a sample point when a random data string is received through a communication line in a deterioration state.
[FIG. 8] FIG. 8 is a diagram illustrating a state in which a delay has occurred in low-speed communication.
[FIG. 9] FIG. 9 is a diagram illustrating a state in which a delay has occurred in high-speed communication.
[FIG. 10] FIG. 10 is a diagram illustrating an example of a configuration of a vehicle control system related to deterioration detection of a communication line.
[FIG. 11] FIG. 11 is a diagram illustrating another example of the configuration of the vehicle control system related to deterioration detection of a communication line.
[FIG. 12] FIG. 12 is a flowchart illustrating operation of the vehicle control system illustrated in FIG. 11 from detection of deterioration to after the detection.
[FIG. 13] FIG. 13 is a flowchart illustrating an example of a method for detecting deterioration of a communication line.
[FIG. 14] FIG. 14 is a flowchart illustrating another example of the method for detecting deterioration of a communication line.
[FIG. 15] FIG. 15 is a flowchart illustrating operation of the vehicle control system illustrated in FIG. 10 from detection of deterioration to after the detection.

### Description of Embodiments

Hereinafter, an embodiment of the present invention will be described with reference to the drawings. Each of the drawings shows an equivalent member denoted by the same reference numeral, and duplicated description of the member will be omitted.

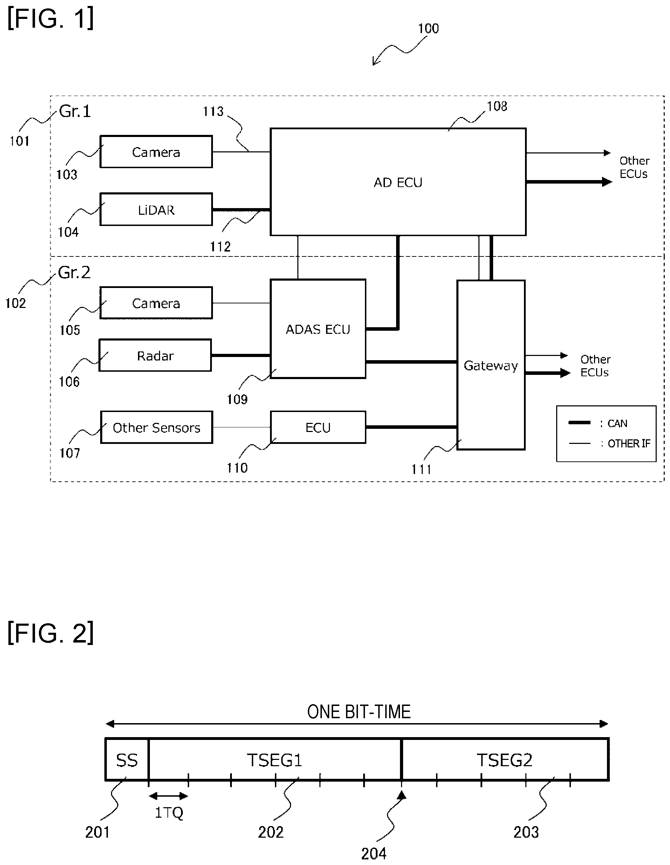

FIG. 1 is a configuration diagram of a vehicle control system. FIG. 1 shows a vehicle control system 100 that includes sensor units 103 to 107, vehicle control devices 108 to 111, a first communication unit 112, and a second communication unit 113. The sensor units 103 to 107 are each connected to one of the vehicle control devices 108 to 110 through the first communication unit 112 or the second communication unit 113 to transmit data to the connected vehicle control device. The vehicle control devices 108 to 111 are each connected to another vehicle control device through the first communication unit 112 or the second communication unit 113 to transmit and receive data to and from the other vehicle control device. The vehicle control device 108 and the sensor units 103 and 104 constitute a first group 101, and the vehicle control devices 109 to 111 and the sensor units 105 to 107 constitute a second group 102. Although FIG. 1 illustrates the two groups, the number of groups is not limited.

The groups 101 and 102 are each a group to which power is supplied from an independent power supply system, for example. One of the groups 101 and 102 complements operation performed by the other group when the other group becomes inoperable.

The sensor units 103 and 105 are each a camera for front detection, rear detection, side detection, vehicle periphery detection, driver monitor, or the like, for example. The camera may be for far or near detection. Although the sensor units 103 and 105 each belong to a different group, the sensor units 103 and 105 each may be the same camera. Alternatively, a plurality of cameras may belong to one group.

The sensor unit 104 is a LiDAR sensor for front detection, rear detection, side detection, or vehicle periphery detection, for example. Although a LiDAR sensor 104 belongs to the first group 101 in FIG. 1, information acquired by the LiDAR sensor 104 may be input into a vehicle control device of another group. Alternatively, a plurality of LiDAR sensors may belong to one group.

The sensor unit 106 is a Radar sensor for front detection, rear detection, side detection, or vehicle periphery detection, for example. The camera may be for far or near detection. Although a Radar sensor 106 belongs to the second group 102 in FIG. 1, information acquired by the Radar sensor 106 may be input into a vehicle control device of another group. Alternatively, a plurality of Radar sensors may belong to one group.

The sensor unit 107 is a sensor other than a camera, LiDAR, or Radar, and is an ultrasonic sensor, a microphone, or a GNSS antenna, for example. Although the sensor unit 107 belongs to the second group 102 in FIG. 1, information acquired by the sensor unit 107 may be input into a vehicle control device of another group.

The vehicle control devices 108 to 111 each perform a predetermined operation based on information received from a sensor unit and another vehicle control device, and include a plurality of microcomputers, memories, and the like.

The first communication unit 112 indicates CAN connection, and performs communication according to communication protocols of CAN and CAN-FD. The communication protocols here include also a protocol of next-generation CAN communication based on the CAN and CAN-FD protocols.

The second communication unit 113 performs other than the CAN communication, such as Ethernet, LIN, or LVDS.

FIG. 2 is a diagram illustrating a section of time (one bit-time) allocated to each bit of a data string transmitted and received by each of the vehicle control devices 108 to 111 through the CAN communication. The one bit-time is divided into a synchronization segment 201 (denoted as "SS" in the drawing), a first time segment 202 (denoted as "TSEG 1" in the drawing), and a second time segment 203 (denoted as "TSEG 2" in the drawing) in order from the head. Then, a boundary between the first time segment 202 and the second time segment 203 is a sample point 204. Additionally, these segments 201 to 203 are each set in units of time quantum (TQ). The time quantum is set in each vehicle control device by a baud rate prescaler (BRP) for an oscillator/built-in clock. In other words, the one bit-time is a multiple of the time quantum.

The synchronization segment 201 is used for synchronization with a signal level (bus level) of a communication line (bus), and nodes (vehicle control devices) connected to the communication line all transmit and receive data with reference to timing of the synchronization segment 201. Thus, the synchronization segment 201 is desirably located at an edge of the bus level (in a synchronization state). The synchronization segment 201 being not located at the edge of the bus level is in a state of being not synchronized with the bus level (asynchronous state). In the state, the synchronization segment 201 is adjusted to be located at the edge of the bus level by synchronization processing performed according to the CAN protocol.

The first time segment 202 is for compensating for a physical delay on a CAN network and a phase error occurring during resynchronization. The physical delay mentioned here is a delay time due to an output buffer, a CAN bus, or an input buffer, for example. The phase error mentioned here is a deviation between nodes that occurs during signal transmission and reception due to a deviation in oscillator frequency, a delay in a transmission path, or the like, for example. The first time segment 202 may be further subdivided into a propagation time segment and a first phase buffer segment. As a role of each segment in this case, the propagation time segment is responsible for physical time compensation, and the first phase buffer segment is responsible for phase error compensation.

The second time segment 203 is for compensating for a phase error that occurs during resynchronization. The phase error mentioned here is a deviation between nodes that occurs during signal transmission and reception due to a deviation in oscillator frequency, a delay in a transmission path, or the like, for example. The second time segment 203 may be a second phase buffer segment.

The sample point 204 is located at the boundary between the first time segment 202 and the second time segment 203, and determines the bus level (dominant or recessive) at timing when the sample point 204 is located. The first time segment 202 and the second time segment 203 vary in size (width) during compensation for a delay and a phase error. The sample point 204 also varies in position with the variation. The sample point 204 is synonymous with a sampling point.

The information on each of the segments 201 to 203 and the sample point 204 is stored in a storage unit of each vehicle control device. The segment information mentioned here is a size (a value of TQ) of each of the segments 201 to 203, a position of the sample point 204, and the like, for example. The segment information can be set by a designer, and a value set by the designer is stored as an initial value.

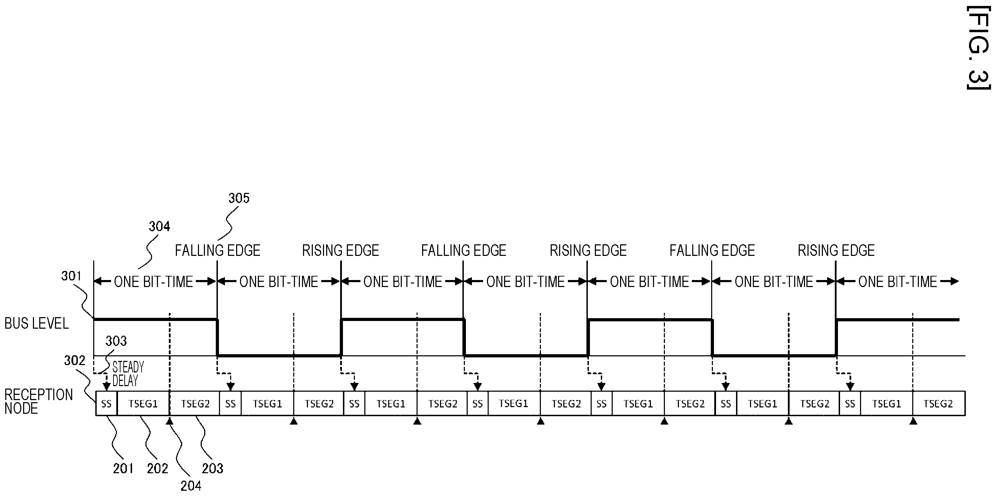

FIG. 3 is a diagram illustrating a state of CAN communication with no occurrence of abnormal delay. The communication line has a bus level 301 that is in any one of a dominant state (logical value is 0) and a recessive state (logical value is 1). The bus level 301 is divided in units of one bit, and a period indicated by one bit-time 304 is one bit (one-bit width).

As illustrated in FIG. 2, one bit-time of a reception node 302 includes the synchronization segment 201, the first time segment 202, and the second time segment 203. Then, the bus level (dominant or recessive) is determined at the timing of the sample point 204 located at the boundary between the first time segment 202 and the second time segment 203.

Delay 303 is until a signal transmitted from another node (transmission node) connected to the reception node 302 is received by the reception node 302. The delay 303 is a steady delay caused by the output buffer of the transmission node, the CAN bus, or the input buffer of the reception node 302, for example.

Timing 305 allows the synchronization processing between the bus level 301 and the reception node 302 to be performed, and corresponds to timing of a falling edge of the bus level (timing of a transition from recessive to dominant). When the bus level 301 and the reception node 302 are not synchronized with each other at the timing 305 (when the synchronization segment 201 of the reception node 302 is not located at the edge of the bus level), the reception node 302 performs position adjustment (synchronization processing) of the segments 201 to 203 to allow the bus level 301 and the reception node 302 to be synchronized with each other. FIG. 3 shows that the bus level 301 and the reception node 302 are synchronized, thus performing no synchronization processing at the timing 305 of the falling edge of the bus level 301.

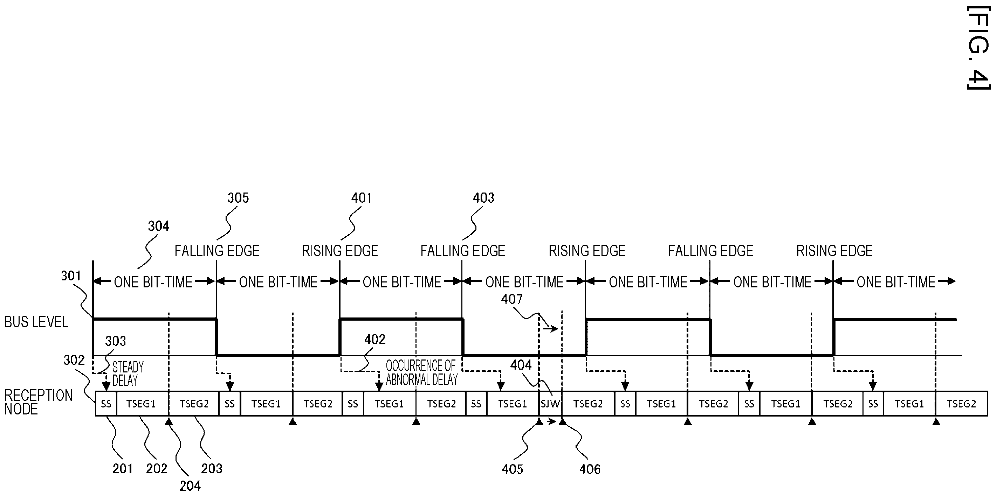

FIG. 4 is a diagram illustrating a state of CAN communication with a continuous occurrence of abnormal delay. Here, abnormal delay 402 is assumed to occur at timing 401 of a rising edge. The delay 402 is specifically transmission delay caused by deterioration of the communication line (increase in a resistance value of the communication line). The delay caused by the deterioration of the communication line features to continue after occurring once. When the delay 402 occurs, a synchronization deviation (a state in which the synchronization segment 201 is not located at the edge of the bus level 301) occurs in the reception node 302. Thus, the synchronization processing is performed at timing 403 of a falling edge after the occurrence of the delay. The synchronization processing is performed to adjust the position of the synchronization segment 201 by adding an additional width 404 for compensating for the synchronization deviation between the first time segment 202 and the second time segment 203. The additional width 404 is also referred to as a synchronization jump width (SJW). The additional width 404 can have a value set by a designer together with information on other segments. When the synchronization deviation is compensated by the additional width 404, timing of an edge of the subsequent bus level 301 can be matched with the synchronization segment 201 to enable the bus level 301 and the reception node 302 to be synchronized. Here, adding the additional width 404 causes the sample point 204 to move from a position 405 to a position 406, thus causing a variation 407 in the sample point 204.

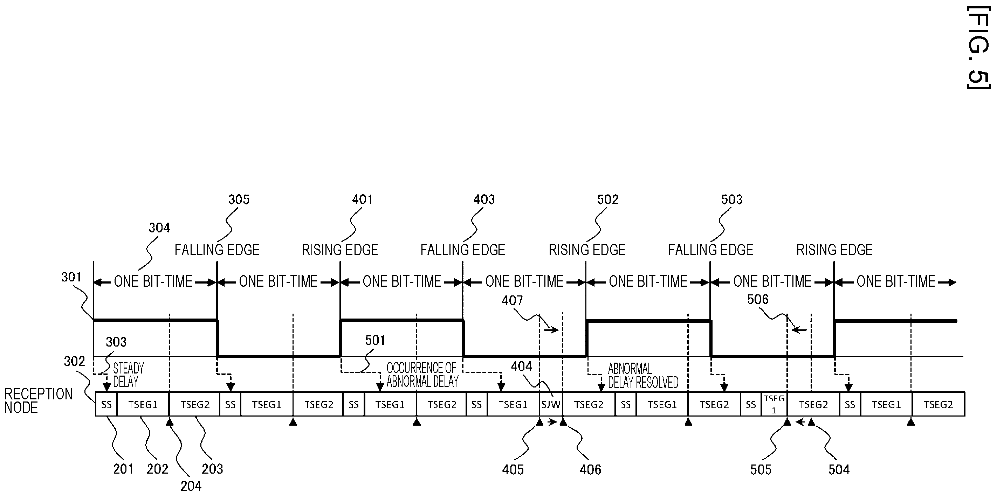

FIG. 5 is a diagram illustrating a state of CAN communication with a temporal occurrence of abnormal delay. Here, abnormal delay 501 is assumed to occur at the timing 401 of the rising edge. The delay 501 is specifically transmission delay caused by temperature variation of a communication line, irregular noise, or the like. This kind of delay occurs due to a temperature rise of the communication line caused by a temporary overload state of the communication line, for example. Thus, when a certain period of time elapses and the overload is eliminated, the temperature of the communication line decreases to resolve the delay. This kind of temporary delay is assumed in FIG. 5, and the delay ends at timing 502 at which a certain period of time has elapsed after occurrence of the delay.

When the delay is resolved at the timing 502, a synchronization deviation occurs between the bus level 301 and the reception node 302, thus performing the synchronization processing again at timing 503 of the falling edge after the timing 502 at which the delay is resolved. The synchronization processing is performed to adjust the position of the synchronization segment 201 by adjusting a size (width) of each of the first time segment 202 and the second time segment 203 to compensate the synchronization deviation. When the synchronization deviation is compensated by adjusting the first time segment 202 and the second time segment 203, timing of an end of each bit of the subsequent bus level 301 can be matched with the synchronization segment 201 to enable the bus level 301 and the reception node 302 to be synchronized. Here, changing the size of each of the first time segment 202 and the second time segment 203 causes the sample point 204 to move from a position 504 to a position 505, thus causing a variation 506 in the sample point 204.

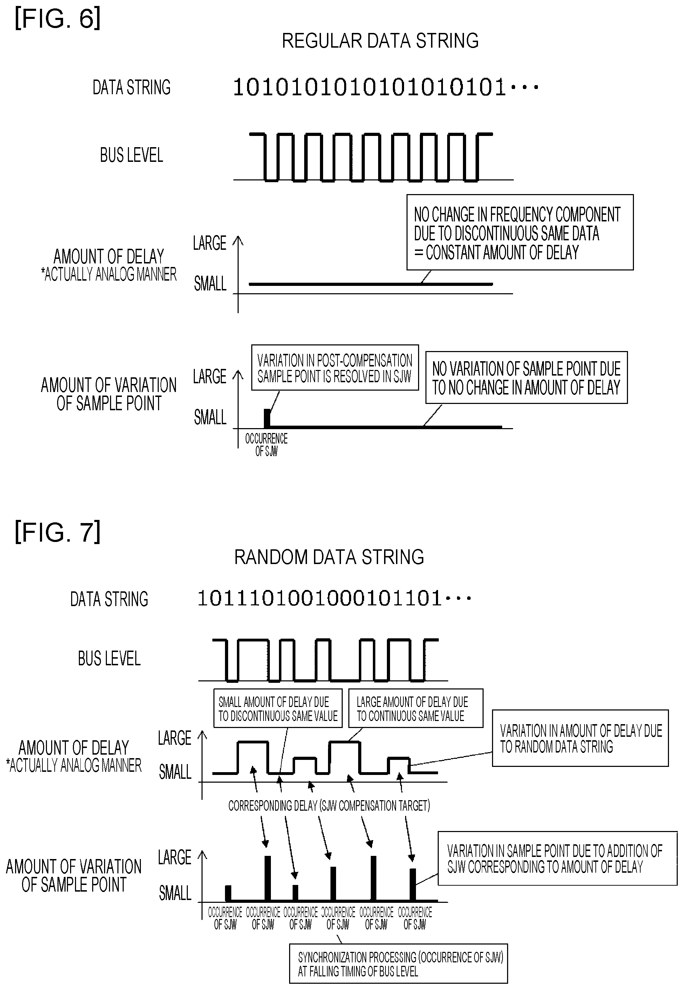

FIG. 6 is a diagram illustrating the amount of variation of the sample point 204 when a regular data string is received through a communication line in a deterioration state. The regular data string mentioned here is a data string in which dominant and recessive alternately appear by one bit-width. This kind of special data string causes no change of a frequency component of the bus level, so that the amount of delay of the communication line becomes constant. Thus, the sample point 204 does not vary after the sample point 204 varies at timing at which the delay is detected first. Consequently, while this kind of regular data string is received, the sample point 204 does not continuously vary, thus failing to detect deterioration of the communication line. However, dominant and recessive randomly appear in an actual data string, thus preventing deterioration of a communication line from being not detected. This point will be described with reference to FIG. 7.

FIG. 7 is a diagram illustrating the amount of variation of the sample point 204 when a regular data string is received through a communication line in a deterioration state. When a random data string is received through a deteriorated communication line, a frequency component of a bus level changes to cause a variation of the amount of delay of the communication line. Specifically, the amount of delay varies in accordance with the number of consecutive times of the same value (dominant or recessive). As a result, the additional width added between the first time segment 202 and the second time segment 203 also varies in size to cause variation of the sample point 204 to continuously occur. Capturing the continuous variation of the sample point 204 enables detecting deterioration of the communication line.

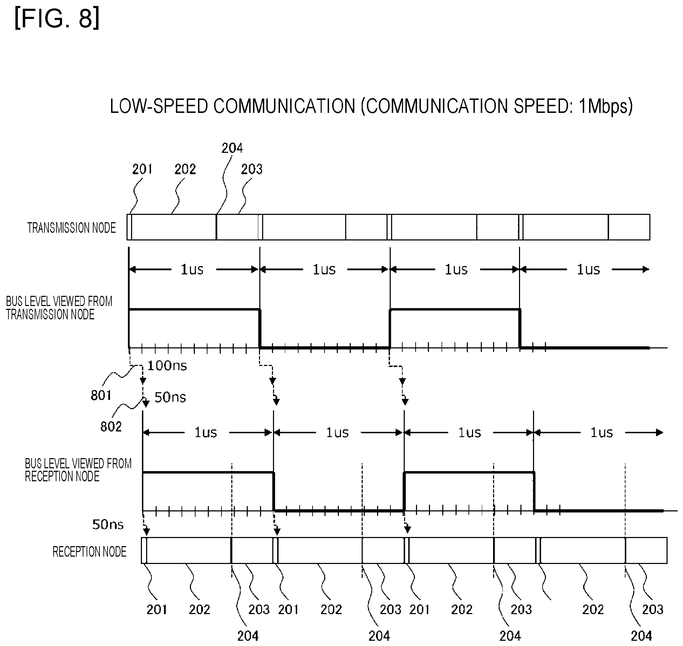

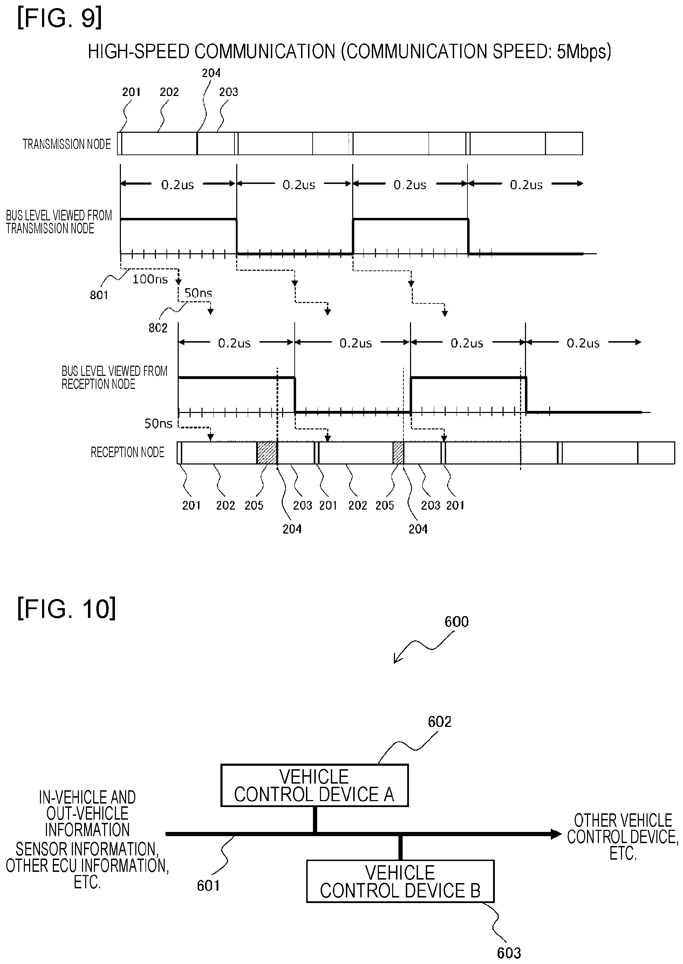

FIG. 8 is a diagram illustrating a state in which a delay has occurred in low-speed communication. FIG. 9 is a diagram illustrating a state in which a delay has occurred in high-speed communication. With reference to FIGS. 8 and 9, a difference between influence of the delay in the low-speed communication on the sample point 204 and influence of the delay in the high-speed communication on the sample point 204 will be described. As illustrated in FIG. 8, when the low-speed communication has a communication speed of 1 Mbps, one bit-time is 1 µs. As illustrated in FIG. 9, when the high-speed communication has a communication speed of 5 Mbps, one bit-time is 0.2 µs.

FIGS. 8 and 9 each show delay 801 that indicates a steady delay, and delay 802 that indicates a delay caused by deterioration of a communication line. The steady delay 801 has a delay time of 100 ns, for example, and the delay 802 due to the deterioration of the communication line has a delay time of 50 ns, for example.

The low-speed communication and the high-speed communication are different in degree of influence per one bit-time even with the same delay time, and the high-speed communication has a larger influence on the sample point 204 than the low-speed communication. Although an occurrence of a delay of 50 ns in the low-speed communication does not cause the sample point 204 to greatly vary, an occurrence of the same delay of 50 ns in the high-speed communication causes the sample point 204 to greatly vary. This is because the high-speed communication has one bit-time shorter than one bit-time of the low-speed communication.

As described above, the low-speed communication with a small amount of variation of the sample point 204 causes a difficulty in detecting the delay, whereas the high-speed communication with a large amount of variation 205 of the sample point 204 for one bit-time enables detecting the delay from the variation of the sample point 204.

FIG. 10 is a diagram illustrating an example of a configuration of a vehicle control system related to deterioration detection of a communication line. FIG. 6 shows a vehicle control system 600 including a communication line 601 used for performing CAN communication, and vehicle control devices 602 and 603. The vehicle control devices 602 and 603 are connected to each other through the communication line 601, and can transmit and receive a CAN signal to and from each other.

The communication line 601 is used for performing communication according to the CAN protocol to transfer data to each node. The data mentioned here is output information from a sensor, information transmitted from another vehicle control device, and other information inside and outside the vehicle, for example.

The vehicle control device 602 is capable of CAN communication, and includes a control unit such as a microcomputer, and a storage unit such as a register. The vehicle control device 602 is one of a plurality of vehicle control devices 602, and the vehicle control devices 602 are connected to other nodes through the communication line 601. Although the drawing shows two vehicle control devices, vehicle control devices more than two in number may be provided. Additionally, a connection method is a multi-master method, thus enabling equal bus access to each node.

The vehicle control device 602 transmits and receives a signal through the communication line 601. The vehicle control device 602 having received the signal performs sampling processing for each bit to determine a bus level of the received signal.

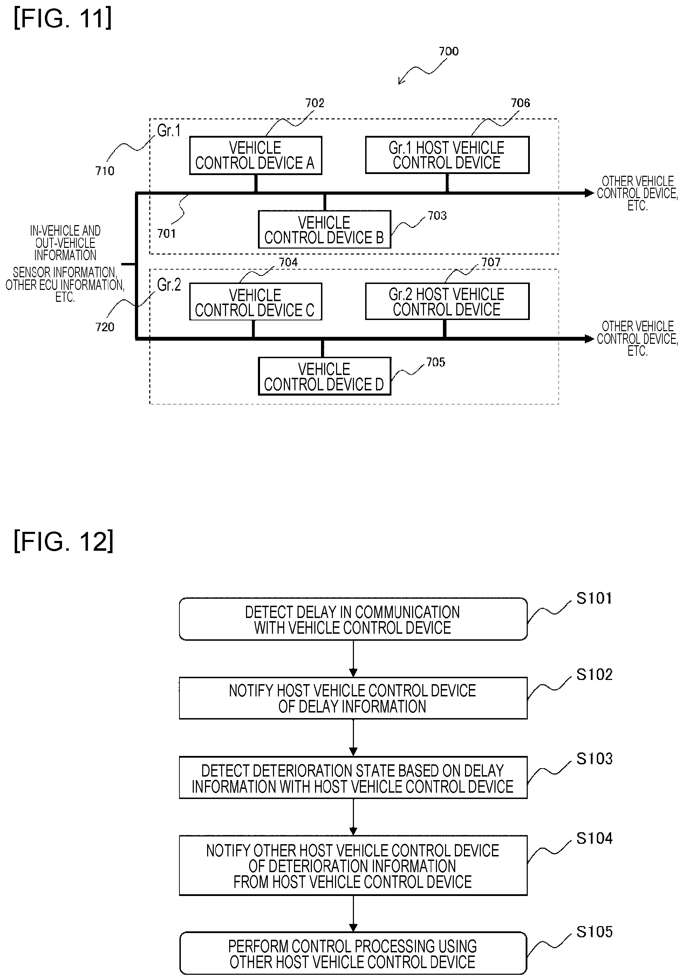

FIG. 11 is a diagram illustrating another example of the configuration of the vehicle control system related to deterioration detection of a communication line. FIG. 11 shows a vehicle control system 700 including a communication line 701 used for performing CAN communication, vehicle control devices 702 to 705, and host vehicle control devices 706 and 707. The vehicle control devices 702 to 705 and the host vehicle control devices 706 and 707 are connected to each other through the communication line 701, and can transmit and receive a CAN signal to and from each other.

The communication line 701 is similar to the communication line 601 illustrated in FIG. 10, and the vehicle control devices 702 to 705 are similar to the vehicle control devices 602 and 603 illustrated in FIG. 10, and thus will not be described.

The host vehicle control devices 706 and 707 each manage the corresponding vehicle control devices 702 to 705 (lower vehicle control devices) belonging to the same group (a first group 710 or a second group 720), and each have a basic configuration similar to that of each of the vehicle control devices 702 to 705. The groups 710 and 720 are each a group to which power is supplied from an independent power supply system, for example. Examples of a management method of each of the vehicle control devices 702 to 705 using the host vehicle control devices 706 and 707 include grasping of diagnosis information of each of the vehicle control devices 702 to 705, determination of processing based on a diagnosis result and performance of the processing, and integration of processing results of the vehicle control devices 702 to 705 (synthesis processing of output data of each vehicle control device).

The host vehicle control devices 706 and 707 each may manage other vehicle control devices in a vehicle control system without a group. The vehicle control devices managed by the host vehicle control devices 706 and 707 may belong to different groups. Additionally, a plurality of host vehicle control devices 706 and a plurality of host vehicle control devices 707 may be provided in the same group.

FIG. 12 is a flowchart illustrating operation of the vehicle control system 700 illustrated in FIG. 11 from detection of deterioration to after the detection.

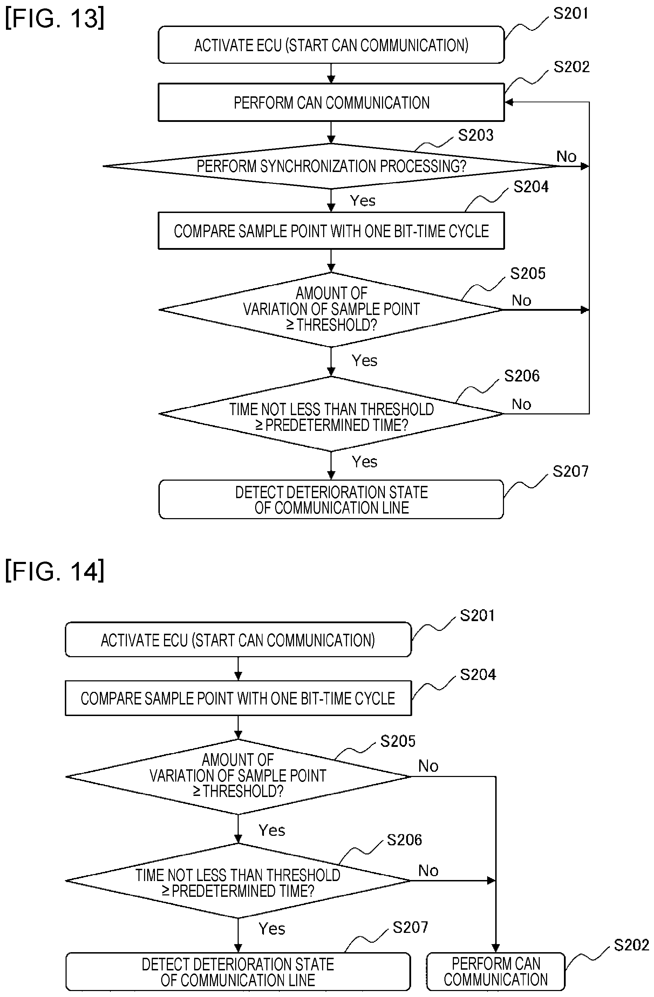

Step S101 is performed to detect a communication delay using each vehicle control device. Details of a method for detecting the communication delay will be described later with reference to FIG. 13.

Step S102 is performed to notify a host vehicle control device of delay information using the vehicle control device having detected the delay in step S101. The delay information mentioned here is information determined as a communication delay based on a comparison result of the sample point 204 performed in step S101. The host vehicle control device mentioned here belongs to the same group as the vehicle control device having detected the delay information. The host vehicle control device may belong to a different group from that of the vehicle control device having detected the delay or a vehicle control system without a group to manage the vehicle control device. Even when a delay is detected on a communication line used for notification to the host vehicle control device, the notification is performed using the communication line as usual as long as communication itself is possible (communication is not impossible due to disconnection or the like). When the communication is difficult, the notification is performed through a different communication line, or the notification to another host vehicle control device is performed, for example. When the vehicle control device having detected the delay in step S101 is the host vehicle control device, step S102 is not performed, and processing proceeds to step S103.

Step S103 is performed to detect a deterioration state of the communication line using the host vehicle control device based on the delay information notified from the vehicle control device in step S102. Details of a method for detecting the deterioration state of the communication line will be described later with reference to FIG. 13.

Step S104 is performed to notify another host vehicle control device of deterioration information using the host vehicle control device having detected the deterioration state of the communication line in step S103. The other host vehicle control device mentioned here belongs to a group different from that of the host vehicle control device having detected the deterioration state of the communication line. Examples of the other host vehicle control device include a host vehicle control device that does not control the vehicle control device having detected the delay in the different group or a system without a group. Even when deterioration is detected on a communication line used for notification to the other host vehicle control device, the notification is performed using the communication line as usual as long as communication is possible (communication is not impossible due to disconnection or the like). When the communication is difficult, the notification is performed through a different communication line, or the notification to another communicable host vehicle control device is performed, for example.

Step S105 is performed to allow the other host vehicle control device to perform control processing based on the deterioration information notified from the host vehicle control device in step S104. The control processing mentioned here is a degraded operation, a notification to a user, or a notification to a server, for example.

The degraded operation is performed in a state where functions and performance are limited and in a group different from a group to which the communication line, in which deterioration has been detected, belongs, for example. The degraded operation enables performing an operation avoiding use of the communication line in a deterioration state, so that a risk of communication line disconnection and delay delay can be avoided to enhance safety. When a current state is difficult to be maintained by the degraded operation due to use of the communication line in which the deterioration has been detected and a degree of the deterioration, processing may be performed to enable transition to a state where operation stop processing or operation stop is possible.

The use of the communication line mentioned here is importance of information, risk, or the like in system operation, for example. When the communication line serving as a base of the system has been in a deterioration state in which the degraded operation without using the communication line is difficult to continue, the system may shift to a state in which the operation stop processing or the operation stop is possible.

Examples of the notification to the user include display on a display, and notification by voice. Examples of notification information include guidance for resolving the deterioration state at an early stage, such as a maintenance reminder. Processing of notification to the user may be performed by the host vehicle control device having detected the deterioration state.

Examples of the notification to the server include a notification to a system administrator. When the administrator grasps the deterioration state, maintenance can be prompted to the user, and thus the deterioration state can be resolved at an early stage. Processing of notification to the server may be performed by the host vehicle control device having detected the deterioration state.

The control processing using the other host vehicle control device continues until the deterioration state of the communication line is resolved. Even when a delay state is resolved while and after the control processing is performed, predetermined operation is continued without changing control operation once the deterioration state is determined. When the delay state is resolved, processing different from the control processing may be performed, such as performing processing in a state before detecting the delay (before the control processing), or performing the deterioration detection processing again, for example.

FIG. 13 is a flowchart illustrating an example of a method for detecting deterioration of a communication line. FIG. 13 shows steps S201 to S207 that are details of steps S101 to S103 in FIG. 12.

Step S101 is performed to activate each vehicle control device to start CAN communication.

Step S202 is performed to cause each vehicle control device to perform the CAN communication.

Step S203 is performed to determine whether the vehicle control device having received a signal of the CAN communication in step S202 has performed synchronization processing. The synchronization processing is performed at falling timing of a bus level when the bus level and a reception node are not synchronized. That is, performing the synchronization processing means that a delay has occurred in the received signal. When the synchronization processing is performed (when the delay has occurred), processing proceeds to step S204, and when the synchronization processing is not performed, the processing returns to step S202 and the CAN communication is continued.

Step S204 is performed to acquire the amount of variation of a sample point associated with the synchronization processing performed in step S202.

Step S205 is performed to determine whether the amount of variation of the sample point acquired in step S204 is equal to or more than a threshold. The amount of variation of the sample point corresponds to a magnitude of the delay. When the amount of variation of the sample point is equal to or larger than the threshold, that is, when the magnitude of the delay is equal to or larger than the threshold, the processing proceeds to step S206, and when the magnitude of the delay is smaller than the threshold, the processing returns to step S202 and the CAN communication is continued.

For example, the threshold is set to a predetermined ratio of a maximum value of an additional width (SJW). The predetermined ratio mentioned here is set based on a degree of importance of information to be transmitted and received (a risk or the like defined by functional safety). For example, when data handled in a communication line A has a risk equivalent to ASIL D, a ratio of the threshold is set small, and data handled in a communication line B has a risk equivalent to ASIL QM, the ratio of the threshold is set large.

The threshold may be also set at a ratio of one bit-time. For example, when the sample point is set at a position of 75% of one bit-time, 15% of one bit-time is set as the threshold.

Step S206 is performed to determine not only whether time during which the amount of variation of the sample point is equal to or more than the threshold is equal to or more than a predetermined time, but also whether the time is a continuous delay, that is, a delay caused by deterioration of the communication line. When the communication line becomes a deterioration state, a delay is continuously generated, and the sample point also continuously varies. In contrast, a temporary delay causes the sample point to also vary temporarily. Thus, whether the sample point varies continuously (whether the communication line is in the deteriorated state) is determined based on whether the time during which the amount of variation of the sample point is equal to or more than the threshold is equal to or more than the predetermined time. Consequently, a temporary delay can be excluded from deterioration detection. When the time during which the amount of variation of the sample point is equal to or more than the threshold is equal to or more than the predetermined time, the processing proceeds to step S207, and when the time is less than the predetermined time, the processing returns to step S202 to continue the CAN communication. The predetermined time mentioned here may be set to any value, or may be set based on a CAN non-reception determination time set in a vehicle control device that performs the deterioration detection, for example.

Step S206 may be performed to determine whether the delay is continuous by using the number of times of determination that the amount of variation is equal to or more than the threshold within a predetermined time. That is, the determination whether the amount of variation of the sample point is equal to or more than the threshold (step S205) is repeatedly performed, and the number of times of determination that the amount of variation of the sample point exceeds the threshold is counted. When the counted number of times exceeds the number of times regarded as a continuous delay, the communication line is determined to be deteriorated. Then, a counting method may be any of the number of times of continuously exceeding the threshold and the total number of times of exceeding the threshold.

Step S207 is performed to determine that the communication line is deteriorated in response to the determinations in steps S205 and S206. After the deterioration state is determined, deterioration information is notified to the other vehicle control devices and the host vehicle control device. Step S207 corresponds to step S103 in FIG. 12.

FIG. 14 is a flowchart illustrating another example of the method for detecting deterioration of a communication line. Hereinafter, a difference from FIG. 13 will be described.

FIG. 14 is different from FIG. 13 in comparison timing of the sample point. The comparison is performed after the synchronization processing (after step S203) in FIG. 13, whereas the comparison is performed when the ECU is activated (after step S201) in FIG. 14. The comparison only when the ECU is activated as in FIG. 14 enables suppressing a processing load as compared with a method for performing the comparison every time the synchronization processing is performed. Meanwhile, decrease in frequency of the comparison deteriorates accuracy of the deterioration detection (increases a period from an occurrence of a deterioration state to detection of the deterioration state). That is, the processing load and the detection accuracy are in a trade-off, so that the comparison timing of the sample point may be selected in consideration of a processing load of the entire system and necessary detection accuracy.

The comparison timing of the sample point may be set based on a lapse of time. For example, the timing may be set as comparison once a day, comparison once a week, or the like. The comparison of the sample point may be performed based on a specific trigger. For example, the comparison may be performed based on a vehicle diagnosis command from the user, a vehicle diagnosis command from a dealer, or the like.

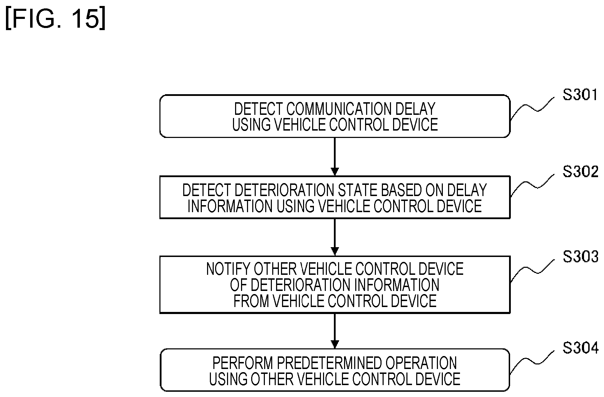

FIG. 15 is a flowchart illustrating operation of the vehicle control system 600 illustrated in FIG. 10 from detection of deterioration to after the detection.

Step S301 is performed to detect a communication delay using each vehicle control device. The details of the method for detecting the communication delay are as described with reference to FIG. 13.

Step S302 is performed to detect a deterioration state of the communication line based on delay information using the vehicle control device having detected the delay in step S301. The details of the method for detecting the deterioration state of the communication line are as described with reference to FIG. 13.

Step S303 is performed to notify another vehicle control device of deterioration information using the vehicle control device having detected the deterioration state of the communication line in step S302. The other vehicle control device mentioned here belongs to a different group from the vehicle control device having detected the deterioration state. Even when deterioration is detected on a communication line used for notification to the other vehicle control device, the notification is performed using the communication line as usual as long as communication is possible (communication is not impossible due to disconnection or the like). Difficulty in the communication is addressed by the notification performed through a different communication line, or the notification to another communicable vehicle control device, for example.

Step S304 is performed to perform control processing using the other vehicle control device based on the deterioration information notified from the vehicle control device in step S303. The control processing mentioned here is a degraded operation, a notification to a user, or a notification to a server, for example.

The degraded operation is performed in a state where functions and performance are limited and in a group different from a group to which the communication line, in which deterioration has been detected, belongs, for example. The degraded operation enables performing an operation avoiding use of the communication line in a deterioration state, so that a risk of communication line disconnection and delay delay can be avoided to enhance safety. When a current state is difficult to be maintained by the degraded operation due to use of the communication line in which the deterioration has been detected and a degree of the deterioration, processing may be performed to enable transition to a state where operation stop processing or operation stop is possible.

The use of the communication line mentioned here is importance of information, risk, or the like in system operation, for example. When the communication line serving as a base of the system has been in a deterioration state in which the degraded operation without using the communication line is difficult to continue, the system may shift to a state in which the operation stop processing or the operation stop is possible.

Examples of the notification to the user include display on a display, and notification by voice. Examples of notification information include guidance for resolving the deterioration state at an early stage, such as a maintenance reminder. Processing of notification to the user may be performed by the vehicle control device having detected the deterioration state.

Examples of the notification to the server include a notification to a system administrator. When the administrator grasps the deterioration state, maintenance can be prompted to the user, and thus the deterioration state can be resolved at an early stage. Processing of notification to the server may be performed by the vehicle control device having detected the deterioration state.

The control processing using the other vehicle control device continues until the deterioration state of the communication line is resolved. Even when a delay state is resolved while or after the control processing is performed, predetermined operation is continued without changing control operation once the deterioration state is determined. When the delay state is resolved, processing different from the control processing may be performed, such as performing processing in a state before detecting the delay (before the control processing), or performing the deterioration detection processing again, for example.

### [Summary]

The present embodiment provides the vehicle control system 600 that includes the multiple vehicle control devices 602 and 603 connected through the communication line 601, the multiple vehicle control devices 602 and 603 each being configured to sample the bus level 301 of the communication line 601 at the sample point 204 occurring in one bit-time period during communication with another vehicle control device, and the multiple vehicle control devices 602 and 603 including one or more predetermined vehicle control devices that determine whether the amount of variation 205 of the sample point 204 from the one-bit time period is equal to or more than a threshold predetermined, and determine whether the communication line 601 is deteriorated based on a frequency at which the amount of variation 205 is determined to be equal to or more than the threshold predetermined.

The present embodiment provides the vehicle control devices 602 and 603 that are each connected to another vehicle control device through the communication line 601 to sample the bus level 301 of the communication line 601 at a sample point occurring in one bit-time period during communication with the other vehicle control device, the vehicle control devices 602 and 603 each being configured to determine whether the amount of variation 205 of the sample point 204 from the one bit-time period is equal to or more than a threshold predetermined, and determine whether the communication line is deteriorated based on a frequency at which the amount of variation is determined to be equal to or more than the threshold predetermined.

The present embodiment provides a method for detecting deterioration of the communication line 701 in the vehicle control system 700 including multiple vehicle control devices 702 to 707 connected through the communication line 701, the multiple vehicle control devices 702 to 707 each being configured to sample the bus level 301 of the communication line 701 at the sample point 204 occurring in one bit-time period during communication with another vehicle control device, the method including: determining whether the amount of variation of the sample point from the one bit-time period is equal to or more than a threshold predetermined; and determining whether the communication line is deteriorated based on a frequency at which the amount of variation is determined to be equal to or more than the threshold predetermined.

The present embodiment provides the predetermined vehicle control devices that include the first lower vehicle control devices 702 and 703 included in the multiple vehicle control devices 702 to 707, and the first host vehicle control device 706 included in the multiple vehicle control devices 702 to 707 to manage the first lower vehicle control devices 702 and 703, the first lower vehicle control devices 702 and 703 being configured to determine whether the amount of variation 205 is equal to or more than the threshold and notify the first host vehicle control device 706 of a result of the determination, and the first host vehicle control device 706 being configured to determine whether the communication line 701 is deteriorated based on the result of the determination notified from the first lower vehicle control devices 702 and 703.

The present embodiment configured as described above enables detecting the deterioration state of each the communication lines 601 and 701 with high accuracy by determining whether corresponding one of the communication lines 601 and 701 is deteriorated based on the frequency at which the amount of variation 205 of the sample point 204 from the one bit-time period is determined to be equal to or more than the threshold predetermined.

The present embodiment provides the predetermined vehicle control devices that include second lower vehicle control devices 704 and 705 included in the multiple vehicle control devices 702 to 707, and a second host vehicle control device 707 included in the multiple vehicle control devices 702 to 707 to manage the second lower vehicle control devices 704 and 705, and the first host vehicle control device 706 being configured to notify the second host vehicle control device 707 when the communication line 701 is determined to be deteriorated. Consequently, the second lower vehicle control devices 704 and 705 can complement operation of the first lower vehicle control devices 702 and 703.

The present embodiment limits the amount of variation 205 to a maximum value predetermined or less, and the threshold is set to a predetermined ratio of the maximum value. Consequently, accuracy of detecting the deterioration state of each of the communication lines 601 and 701 can be improved.

The present embodiment causes the predetermined vehicle control device to determine whether the communication line is deteriorated based on the number of times of continuous determination that the amount of variation 205 is equal to or more than the threshold or the number of times of determination that the amount of variation 205 is equal to or more than the threshold within a predetermined time. Consequently, accuracy of detecting the deterioration state of each of the communication lines 601 and 701 can be improved.

The present embodiment allows the threshold to be set based on a risk defined by functional safety corresponding to control performed by the predetermined vehicle control device. Consequently, a deterioration state of a line passage handling important information (such as information with a high level of ASIL) can be detected at an early stage.

The present embodiment causes the amount of variation 205 to be acquired at a timing at which the predetermined vehicle control device performs synchronization processing with the bus level 301. Consequently, a communication delay can be detected at an early stage.

The present embodiment causes the amount of variation 205 to be acquired at timing at which the predetermined vehicle control device is activated. Consequently, a processing load of each of the vehicle control systems 600 and 700 can be suppressed. Although the embodiments of the present invention have been described in detail above, the present invention is not limited to the above-described embodiments, and includes various modifications. For example, the above-described embodiments have been described in detail to describe the present invention in an easy-to-understand manner, and are not necessarily limited to those having all the described configurations.

### Reference Signs List

100 vehicle control system
101 first group
102 second group
103 to 107 sensor unit
108 to 111 vehicle control device
112 first communication unit
113 second communication unit
201 synchronization segment
202 first time segment
203 second time segment
204 sample point
205 amount of variation
301 bus level
302 reception node
303 delay
304 one bit-time
305, 401 timing
402 delay
403 timing
404 additional width
405, 406 position
407 variation
501 delay
502, 503 timing
504, 505 position
506 variation
600 vehicle control system
601 communication line
602, 603 vehicle control device
700 vehicle control system
701 communication line
702 to 705 vehicle control device (lower vehicle control device)
706, 707 host vehicle control device
710 first group
720 second group
801, 802 delay

## Claims

1. A vehicle control system comprising:
multiple vehicle control devices connected through a communication line,
the multiple vehicle control devices each being configured to sample a bus level of the communication line at a sample point occurring in one bit-time period during communication with another vehicle control device, and
the multiple vehicle control devices including one or more predetermined vehicle control devices that determine whether an amount of variation of the sample point from the one bit-time period is equal to or more than a threshold predetermined, and determine whether the communication line is deteriorated based on a frequency at which the amount of variation is determined to be equal to or more than the threshold predetermined.

2. The vehicle control system according to claim 1, wherein
the predetermined vehicle control devices include a first lower vehicle control device included in the multiple vehicle control devices, and a first host vehicle control device included in the multiple vehicle control devices to manage the first lower vehicle control device,
the first lower vehicle control device is configured to determine whether the amount of variation is equal to or more than the threshold and notify the first host vehicle control device of a result of the determination, and
the first host vehicle control device is configured to determine whether the communication line is deteriorated based on the result of the determination notified from the first lower vehicle control device.

3. The vehicle control system according to claim 2, wherein
the predetermined vehicle control devices include a second lower vehicle control device included in the multiple vehicle control devices, and a second host vehicle control device included in the multiple vehicle control devices to manage the second lower vehicle control device, and
the first host vehicle control device is configured to notify the second host vehicle control device when the communication line is determined to be deteriorated.

4. The vehicle control system according to claim 1, wherein
the amount of variation is limited to a predetermined maximum value or less, and
the threshold is set to a predetermined ratio of the maximum value.

5. The vehicle control system according to claim 1, wherein
the predetermined vehicle control devices determine whether the communication line is deteriorated based on the number of times of continuous determination that the amount of variation is equal to or more than the threshold, or the number of times of determination that the amount of variation is equal to or more than the threshold within a predetermined time.

6. The vehicle control system according to claim 1, wherein
the threshold is set based on a risk defined by functional safety corresponding to control performed by the predetermined vehicle control devices.

7. The vehicle control system according to claim 1, wherein
the amount of variation is acquired at a timing at which the predetermined vehicle control devices perform synchronization processing with the bus level.

8. The vehicle control system according to claim 1, wherein
the amount of variation is acquired at a timing at which the predetermined vehicle control devices are activated.

9. A vehicle control device that is connected to another vehicle control device through a communication line and that samples a bus level of the communication line at a sample point occurring in one bit-time period during communication with the other vehicle control device,
the vehicle control device being configured to determine whether the amount of variation of the sample point from the one bit-time period is equal to or more than a threshold predetermined, and to determine whether the communication line is deteriorated based on a frequency at which the amount of variation is determined to be equal to or more than the threshold predetermined.

10. A method for detecting deterioration of a communication line in a vehicle control system including multiple vehicle control devices connected through a communication line, the multiple vehicle control devices each being configured to sample a bus level of the communication line at a sample point occurring in one bit-time period during communication with another vehicle control device, the method comprising:
determining whether the amount of variation of the sample point from the one bit-time period is equal to or more than a threshold predetermined; and
determining whether the communication line is deteriorated based on a frequency at which the amount of variation is determined to be equal to or more than the threshold predetermined.
